# EUROPEAN PATENT APPLICATION

(11) **EP 1 538 353 A1**
(43) Date of publication of application: **08.06.2005**
(21) Application number: 03794089.7
(22) Date of filing: 21.08.2003
(51) Int. Cl.: F16C 33/10, F16C 11/04, F16C 3/02, E02F 9/00

(54) **BEARING DEVICE**

(30) Priority: 09.09.2002 JP 2002263174
(71) Applicant: Hitachi Construction Machinery Co., Ltd., Tokyo 112-004 (JP)
(72) Inventor: WAKABAYASHI, Yusuke, Toride-shi, Ibaraki 302-0011 (JP); MIYANAGI, Naoki, Niihari-gun, Ibaraki 315-0052 (JP); SAKURAI, Shigeyuki, Tsukuba-shi, Ibaraki 300-3253 (JP); GOKITA, Osamu, Niihari-gun, Ibaraki 315-0051 (JP); AKITA, Hideki, Tsuchiura-shi, Ibaraki 300-0051 (JP)
(74) Representative: Grünecker, Kinkeldey, Stockmair & Schwanhäusser Anwaltssozietät
(86) International application number: PCT/JP2003/010599
(87) International publication number: WO 2004/022989

(57) **Abstract**

A bearing apparatus has a porous bush (9) impregnated with lubricant and a shaft (10) supported by the bush (9). The shaft (10) has a quench hardened section (10a) formed in the form of a projection, and an indentation (10b) which is formed between portions of the quench hardened section (10a) and traps lubricant flowing out of the bush (9).

## Description

### <Technical Field>

The present invention relates to a bearing apparatus, and more particularly to a bearing apparatus having a slide bearing for slidably supporting a shaft.

### <Background Art>

A hydraulic excavator is mentioned as an example of a digging unit of construction equipment. In the hydraulic excavator, a bucket is joined to a top end of an arm. In a digging operation using this bucket, the bucket is rotated or pivoted about a joint at which the bucket is coupled to the arm by means of actuating a bucket cylinder. The joint between the bucket and the arm is provided with a bearing formed by trapping lubricating oil in pores within a porous bush. The lubricating oil is caused to flow from the inside of the bush to a sliding surface of the bearing in association with sliding action of the shaft, thereby preventing occurrence of seizing, seizure, or abrasion and in turn enabling oilless slidable action of the shaft over a long period of time. Such a bearing is disclosed in, e.g., JP-A-10-82423.

JP-A-10-82423 discloses a slide bearing which can maintain superior oilless slidable state over a long period of time by means of a mixture and which is effective for use at a low speed and under high bearing pressure, wherein the mixture is formed from a high-viscosity black lubricating substance stemming from a mechanochemistry reaction arising between the shaft and the bush, and the lubricating oil flowing out of the bush.

However, in accordance with a demand for longer life of construction equipment, a further improvement in the function of the slide bearing is desired.

### <Disclosure of the Invention>

An object of the present invention is to provide a bearing apparatus which can maintain superior oilless slidable state over a long period of time of several or more years even under the condition that the bearing apparatus undergoes high bearing pressure.

In order to achieve the object, the present invention provides the following:
(1) A bearing apparatus including: a porous bush impregnated with lubricant; a shaft supported by the bush; a quench hardened section formed in a projecting manner on an outer surface of the shaft which faces an inner surface of the bush; and an indentation which is formed between portions of the quench hardened section and traps lubricant flowing out of the bush.
(2) The bearing apparatus described in (1), wherein the quench hardened section is helicallyprovided on the outer surface of the shaft.
(3) The bearing apparatus described in (1), wherein the quench hardened section is provided on the outer surface of the shaft in the form of a line parallel to an axial direction of the shaft.
(4) The bearing apparatus described in (1), wherein the quench hardened section is provided on the outer surface of the shaft in the form of a plurality of circles.
(5) The bearing apparatus described in (1), wherein the quench hardened section is provided on the outer surface in the form of a lattice.
(6) The bearing apparatus described in (2), wherein the quench hardened section is provided on the outer surface of the shaft such that one side of the quench hardened section with respect to a substantial center of the shaft in an axial direction thereof and the other side of the quench hardened section are the form of inverted helixes.
(7) The bearing apparatus described in any one of (1) to (6), further including: sealing members provided on both sides of the bush in an axial direction thereof, wherein the quench hardened section is provided at positions on the outer surface of the shaft facing the sealing members.
(8) A construction equipment which is provided with the bearing apparatus described in any one of (1) to (7), the bearing apparatus being provided at a joint of arms constituting an articulated arm.
(9) A shaft including: a quench hardened section formed on an outer surface of the shaft in a projecting manner; and an indentation formed between portions of the quench hardened section, wherein the indentation traps lubricant flowing out of a porous bush which is impregnated with lubricant and supports the shaft.
(10) The shaft described in (9), wherein the quench hardened section is helically provided on the outer surface of the shaft.
(11) The shaft described in (9), wherein the quench hardened section is provided on the outer surface of the shaft in the form of a line parallel to an axial direction of the shaft.
(12) The shaft described in (9), wherein the quench hardened section is provided on the outer surface of the shaft in the form of a plurality of circles.
(13) The shaft described in (9), wherein the quench hardened section is provided on the outer surface of the shaft in the form of a lattice.
(14) The shaft described in (10), wherein the quench hardened section is provided on the outer surface of the shaft such that one side of the quench hardened section with respect to a substantial center of the shaft in an axial direction thereof and the other side of the quench hardened section are the form of inverted helixes.

### <Brief Description of the Drawings>

Fig. 1 is a front view showing a hydraulic excavator equipped with a bearing apparatus according to an embodiment of the present invention;
Fig. 2 is a longitudinal cross-sectional view showing the embodiment of the bearing apparatus according to the present invention;
Fig. 3 is a front view showing an example of an apparatus for manufacturing a shaft constituting the bearing apparatus according to the embodiment of the present invention;
Fig. 4 is a characteristic curve diagram showing variations in the coefficient of friction developing between a shaft having a helical quench hardened section constituting the bearing apparatus according to the embodiment of the present invention and a shaft whose entire outer surface has been induction hardened;
Fig. 5 is a longitudinal cross-sectional view showing another embodiment of the bearing apparatus according to the present invention;
Fig. 6 is a longitudinal cross-sectional view showing yet another embodiment of the bearing apparatus according to the present invention;
Fig. 7 is a longitudinal cross-sectional view showing still another embodiment of the bearing apparatus according to the present invention;
Fig. 8 is a longitudinal cross-sectional view showing yet another embodiment of the bearing apparatus according to the present invention;
Fig. 9 is a longitudinal cross-sectional view showing still another embodiment of the bearing apparatus according to the present invention;
Fig. 10 is a longitudinal cross-sectional view showing yet another embodiment of the bearing apparatus according to the present invention; and
Fig. 11 is a longitudinal cross-sectional view showing still another embodiment of the bearing apparatus according to the present invention.

### <Best Modes for Implementing the Invention>

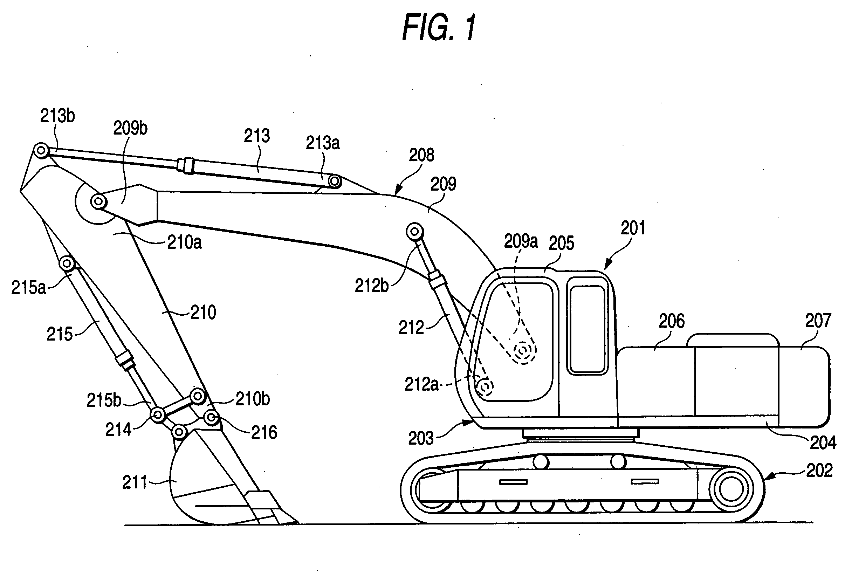

An embodiment of a bearing apparatus and a shaft, both pertaining to the present invention, will be described hereinbelow by reference to the drawings. Fig. 1 shows a hydraulic excavator equipped with a first embodiment of the bearing apparatus and that of the shaft, both pertaining to the present invention. In Fig. 1, reference numeral 201 designates the hydraulic excavator; 202 designates a traveling body of the hydraulic excavator; and 203 designates a swivel body which is mounted on the traveling body 202 in a turnable manner and has a swivel frame 204. An operator cab 205, a machine room 206, a counterweight 207, and the like are provided on the swivel frame 204. Reference numeral 208 designates an articulated arm attached to the front of the swivel body 203, and this articulated arm 208 includes a boom 209 provided on the swivel frame 204 of the swivel body 203 so as to be able to elevate; an arm 210 provided at a top end of the boom 209 in a rotatable manner; and a digging bucket 211 rotatably provided at a top end of the arm 210. An apparatus for driving the articulated arm 208 and the digging bucket 211 is constituted of a boom actuation cylinder 212 interposed between the swivel frame 204 and the boom 209; an arm actuation cylinder 213 interposed between the boom 209 and the arm 210; and a bucket actuation cylinder 215 interposed between the arm 210 and the digging bucket 211 by way of a link 214.

The phrase "a joint of an arm constituting an articulated arm" employed herein implies a joint located between a base end 209a of the boom 209 and the swivel frame 204; a joint located between an extremity 209b of the boom 209 and a base end 210a of the arm 210; and a joint located between the extremity 210b of the arm 210 and the bucket 211. Further, the expression "the joint of the arm constituting the articulated arm" employed herein implies a joint located between a base end 212a of the boom actuation cylinder 212 and the swivel frame 204; a joint located between a piston rod extremity 212b of the boom actuation cylinder 212 and the boom 209; a joint located between a base end 213a of the arm actuation cylinder 213 and the boom 209; a joint located between a piston rod extremity 213b of the arm actuation cylinder 213 and the arm 210; a joint located between a base end 215a of the bucket actuation cylinder 215 and the arm 210; and a joint locatedbetween a piston rod extremity 215b of the bucket actuation cylinder 215 and the link 214.

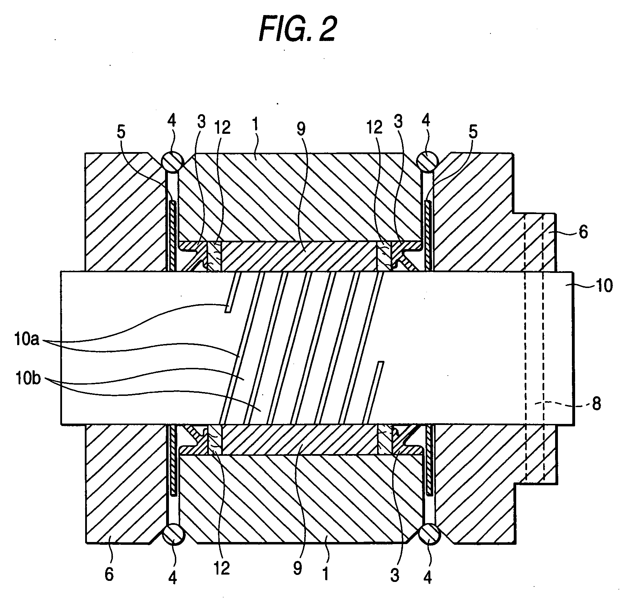

Fig. 2 shows the joint of the articulated arm equipped with a first embodiment of the bearing apparatus according to the present invention, and the joint can be applied to, e.g., a bearing apparatus 216 (see Fig. 1) provided at the arm extremity 210b. In the bearing apparatus shown in Fig. 2, a bush 9 is fitted into a boss 1. Brackets 6 are provided on respective sides of the boss 1, and a shim 5 is provided in a clearance existing between the boss 1 and the corresponding bracket 6. An O-ring 4 is fitted around an outer periphery of the clearance. A shaft 10 penetrates through the brackets 6 on respective sides and the bush 9. By means of a rotation lock bolt 8 penetrating through the shaft 10 and one of the brackets 6, the shaft 10 is fixed (stationarily). Oil insulating members 12 are provided on respective ends of the bush 9, and dust seals 3 are press-fitted between the boss 1 and the shaft 10 such that the oil insulating members 12 are brought into contact with the bush 9.

The entirety of the bush 9 is formed from, e.g., a porous composite sintered alloy, wherein the porous composite sintered metal is made from powder including copper powder and iron powder. The entirety of the bush 9 may also be formed from an alloy including copper and aluminum. The bush 9 may also be provided with a porous sintered layer including copper and iron provided on an interior surface of a base material (called "back metal"), such as iron, or a porous sintered layer including copper and aluminum provided on the interior surface of the base material, such as iron.

The bush 9 is required to possess strength and abrasion resistance and hence is formed preferably from a porous iron-based sintered alloy including a martensite structure. Particularly, the bush 9 is preferably made from an alloy formed by dispersing copper in an iron-carbon-based alloy base material in the manner of spots. The bush 9 comprises copper dispersed in the hard iron-carbon-based alloy base material, the copper being soft and highly conformable to the shaft and the alloy being constituted of few elements, and hence exhibiting superior durability. The content of copper preferably ranges from 8 wt.% to 25 wt.%. If the amount of copper existing in a sliding surface is small, the property of the hard iron-carbon-based alloy becomes dominant and likely to subject the shaft to abrasive wearing. In contrast, if the content of copper is excessively high, the shaft 10 performs sliding action under high bearing pressure, so that copper becomes deformed, or pores of the surface of the shaft 10 become closed, thereby rendering abrasion of the shaft likely to proceed.

Preferably, the higher the pore ratio of the porous iron-based sintered alloy, the higher the oil-bearing capacity, but the lower the density of the bush, which in turn results in a decrease in strength and affects the abrasion resistance. Therefore, the pore ratio preferably ranges from 15 to 28%. When the content of copper is 25 wt.% and the pore ratio is 28%, the density of the porous iron-based sintered alloy assumes 5. 8 g/cm³.

After having been hardened, an inner peripheral surface of the bush 9 formed from the porous iron-based sintered alloy is impregnated with a lubricant and cut through use of a lathe, to thereby preferably constitute a cut surface having roughness in an axial direction. A dense layer―whose pores are reduced by cutting and which has a depth of 10 to 60µm―is preferably formed on the inner peripheral surface of the bush 9. The amount of pores opened in the surface of the dense layer preferably ranges from 1 to 10 area percentage. Moreover, an elevational difference between a peak height and a bottom of the roughness preferably ranges from 2 to 12.5 µm and, more preferably, 5 µm or thereabouts. When the shaft 10 is slid within such a bush 9, the pressure of the lubricant (i.e., the strength of an oil film) is high, because the number of exposed pores in the inner peripheral surface of the bush 9 is comparatively small. However, high radial load is induced by high bearing pressure exerted on the inner peripheral surface of the bush 9, whereupon the inner peripheral surface of the bush 9 becomes worn. In association with a progress in abrasion, the dense layer provided on the inner peripheral surface of the bush 9 is removed, so that a larger number of pores become exposed in the sliding surface. The temperature of the bush 9 is increased by means of sliding action, and a large amount of lubricant is supplied from the pores by virtue of a difference in thermal expansion.

For instance, lubricant having a dynamic viscosity of 220 to 1000 cst or thereabouts at 40°C or wax-like semi-solid lubricant can be used as the lubricant to be used for impregnating the porous bush 9. The thus-impregnated lubricant expands more greatly than does the metal, which is the base material of the bush 9, as a result of an increase in the temperature of the bush 9 associated with sliding action and is supplied to the sliding surface.

When the porous bush is impregnated with high-viscosity lubricant, the lubricant is heated to be liquefied so as to have a lower viscosity level, and the bush is immersed in the thus-liquefied lubricant and left stationary in a vacuum atmosphere. As a result, the air trapped in the pores of the bush escapes, and the liquefied lubricant is absorbed into the pores of the bush instead of the air. When the bush is taken into the air and left and cooled to room temperature, the liquefied lubricant is restored to its original high-viscosity lubricant within the pores of the bush, thus losing fluidity. Thus, the high-viscosity lubricant can be preserved within the pores of the bush. For instance, when lubricant having a viscosity of 460 cSt is heated up to 60 to 80°C and the bush is immersed in this lubricant in a vacuum of 2x10⁻² mmHg, the pores of the bush become saturated within about an hour.

A helical quench hardened section 10a projecting from an outer peripheral surface of the shaft 10 and an indentation section 10b formedbetween portions of the helical quench hardened section 10a are formed in the outer peripheral surface opposing the inner peripheral surface of the bush 9. Formation of the quench hardened section 10a will be described later. The indentation section 10b has the function of capturing the lubricant flowing out of the bush 9. The shaft 10 is formed from, e.g., S45C described in JIS (Japanese Industrial Standards).

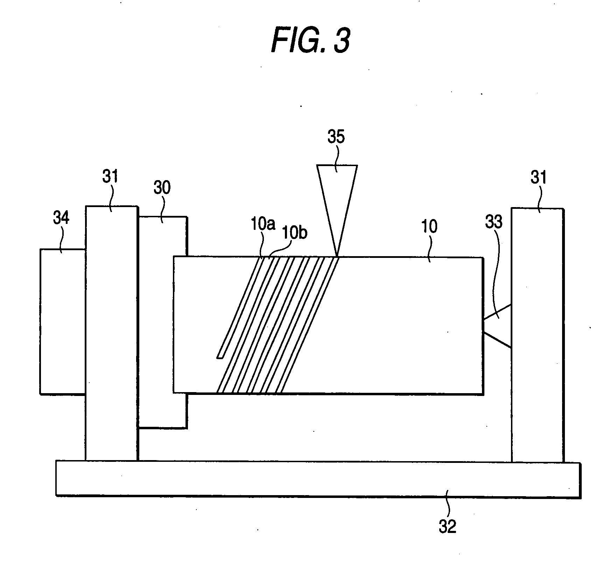

Fig. 3 shows an apparatus for manufacturing the shaft 10 through irradiation of laser or an electron beam. In Fig. 3, one end of the shaft 10, which is an article to be machined, is supported by a clamping mechanism 30. The clamping mechanism 30 is supported by a support 31. The one support 31 is equipped with a motor 34 for rotating the clamping mechanism 30. The other end of the shaft 10 is supported by a centering member 33. The centering member 33 is supported by the other support 31. The shaft 10, the clamping mechanism 30, and the centering member 33 rotate about a common axis. The two supports 31 are fastened to an XY table 32 and can shift the position of the shaft 10, which is the article to be machined, in an X-Y direction by means of a controller such as an NC machine.

Reference numeral 35 designates an energy beam such as a laser or an electron beam. The energy beam 35 is radiated on the shaft 10 that is being rotated at a constant circumferential speed by means of the motor 34, in, e.g., a vertical direction. The energy beam 35 is shifted in the axial direction of the shaft 10 while irradiation of the energy beam 35 is continued, thereby enabling formation of the spiral quench hardened section 10a in the shaft 10. The XY table 32 supporting the shaft 10 may also be shifted in a longitudinal direction of the shaft 10.

The quench hardened section 10a is formed in the outer periphery of the shaft 25 in a helical pattern by means of irradiation of the energy beam 35 or induction hardening. The quench hardened section 10a is subjected to expansion of martensite during the course of heating and cooling operations, and when irradiation of laser is effected on condition that output power is 1000W, the quench hardened section 10a projecting about 10 µm or thereabouts is formed. As a result of the quench hardened section 10a formed in the shaft 10 projecting, intervals between portions of the quench hardened section 10a constitute the indentation 10b.

When the bearing apparatus constituted by combining the shaft 10 having the helically-quench hardened section 10a formed thereon with the lubricant-impregnated porous bush 9 is used under high bearing pressure and low sliding speed, as in the case of the bearing apparatus 216 shown in Fig. 1, high bearing pressure acts on the porous bush 9 and the shaft 10 simultaneously with commencement of sliding action, and the lubricant with which the porous bush 9 is impregnated flows onto the sliding surface that is an interior surface of the porous bush. This lubricant flows into and is accumulated in the indentation 10b. Thus, the retaining characteristic of the lubricant is improved, and an attempt can be made to improve anti-seizing characteristic and lengthen the life of the bearing apparatus. Moreover, the projection-like quench hardened section 10a formed in the shaft 10 can locally increase the bearing pressure exerted on the porous bush 9, whereby the lubricant with which the porous bush 9 is impregnated can be effectively withdrawn. The bearing pressure exerted on the quench hardened section 10a and that exerted on the porous bush 9 are increased, but the absolute amount of lubricant existing on the sliding surface is increased by the pressure effect, thereby rendering the lubricant very stable.

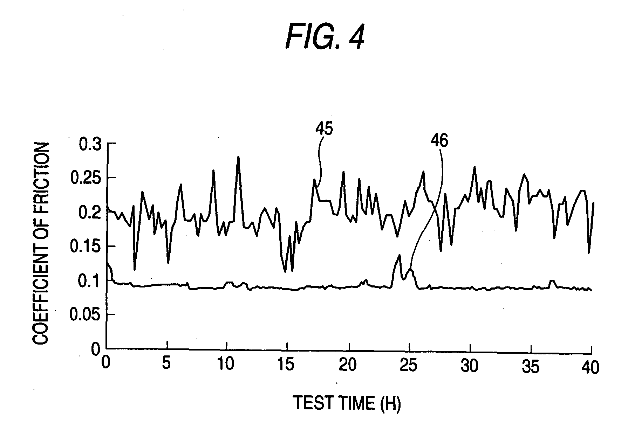

Fig. 4 shows actually-measured data demonstrating this effect. A characteristic curve 45 shown in Fig. 4 shows variations in the coefficient of friction with respect to a test time achieved when the shaft whose entire sliding surface has been induction-hardened is slid against the porous bush impregnated with the lubricant under constant bearing pressure. The characteristic curve 46 shows variations in the coefficient of friction with respect to a test time achieved when the shaft that has been helically hardened with laser radiation has been slid against the lubricant-impregnated porous bush under constant bearing pressure. As is evident from these characteristic curves, the characteristic curve 45 achieved as a result of use of the shaft whose entire sliding surface has been induction-hardened becomes greatly varied with lapse of time, whilst the characteristic curve 46 achieved as a result of use of the shaft helically-induction-hardened with laser radiation is very stable and at a low level. In general, friction powder arises as a result of initial abrasion which occurs immediately after commencement of sliding action, but use of the porous bush 9 and the helically-laser-hardened shaft 10 enables a reduction in the amount of friction powder, which is produced by initial abrading operation.

Under the sliding conditions of high bearing pressure, which is exerted on the construction equipment, when the surface hardness of the quench hardened section 10a formed on the shaft 10 assumes an Hv of less than 550, the projecting section fails to withstand the bearing pressure and is abraded, whereupon the indentation 10b disappears and exerts the effect of an oil sump. Therefore, the surface hardness of the quench hardened section 10a must be increased to at least Hv 550 or more, and, to this end, a steel material having a carbon content of 0.35 wt.% or more, which affects hardness during hardening, should be used as the material of the shaft 10.

When the area percentage of the quench hardened section 10a on the sliding surface of the shaft 10, the surface opposing the inner peripheral surface of the porous bush 9, has decreased to 20% or less, the bearing pressure exerted on the quench hardened section 10a and that exerted on the porous bush 9 may become too high, thereby inducing one-sided abrasion. When the area percentage of the quench hardened section 10a in the sliding surface has increased to 80% or more, the volume of the oil sump becomes smaller, thereby deteriorating the function of retaining the lubricant and the anti-seizing characteristic. Therefore, the area percentage of the quench hardened section 10a preferably ranges from 20 to 80%. Particular, when the area percentage of the quench hardened section 10a is 50% or more, the porous bush 9 is sufficiently heated, as a result of which the lubricant preferably becomes easy to flow to the sliding surface constituted of the porous bush 9 and the shaft 10.

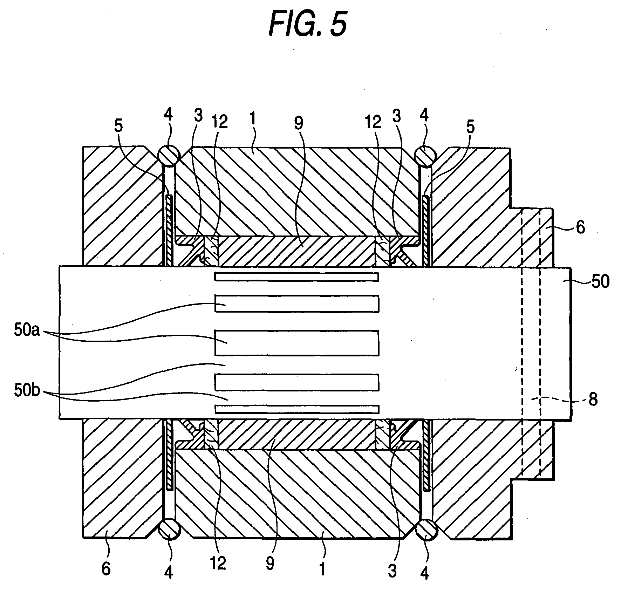

The shape of the quench hardened section formed on the outer surface of the shaft constituting the bearing apparatus of the present invention is not limited to the foregoing helical shape, and, as in the case of a shaft 50 shown in Fig. 5, a quench hardened section 50a may be formed on an outer surface of the shaft 50 in a linear pattern parallel to an axis of the shaft, and an indentation 50b may be formed between portions of the quench hardened section 50a.

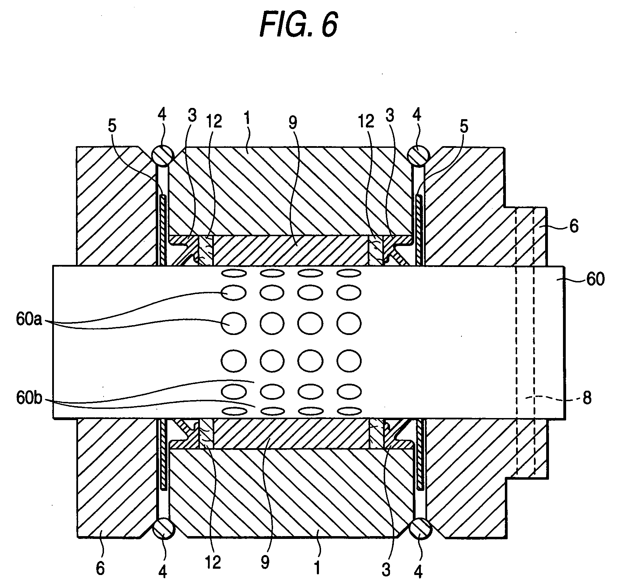

As in the case of a shaft 60 shown in Fig. 6, a plurality of quench hardened sections 60a may be formed on an outer surface of the shaft 60 in the form of a plurality of circular patterns. The quench hardened sections 50a, 60a can also be formed through use of the manufacturing apparatus such as that shown in Fig. 3. The area percentage of the quench hardened section on the sliding surfaces of the respective shafts 50, 60 described by reference to Figs. 5 and 6 preferably ranges from 20 to 80%, more preferably 50 to 80%, for the same reason as that provided previously.

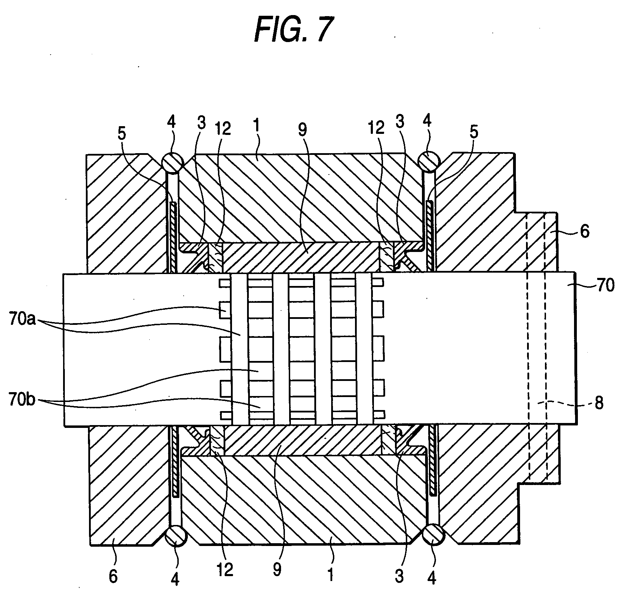

When the foregoing bearing apparatus is used as a bearing of, e.g., an articulated arm involving turning action which can be seen in construction equipment, the lubricant flowing out of the porous bush 9 may move to one end of the bearing apparatus for reasons of the centrifugal force of the turning action or the inclination of the bearing apparatus attributable to the tilt of the hydraulic excavator 201. For this reason, as shown in Fig. 7, a quench hardened section 70a is formed into a lattice or mesh pattern, thereby reducing unbalanced existence of the lubricant having flowed from the porous bush 9. The quench hardened section 70a may be formed into a mesh pattern so as to obliquely cut across the shaft 70 with reference to an axial direction thereof.

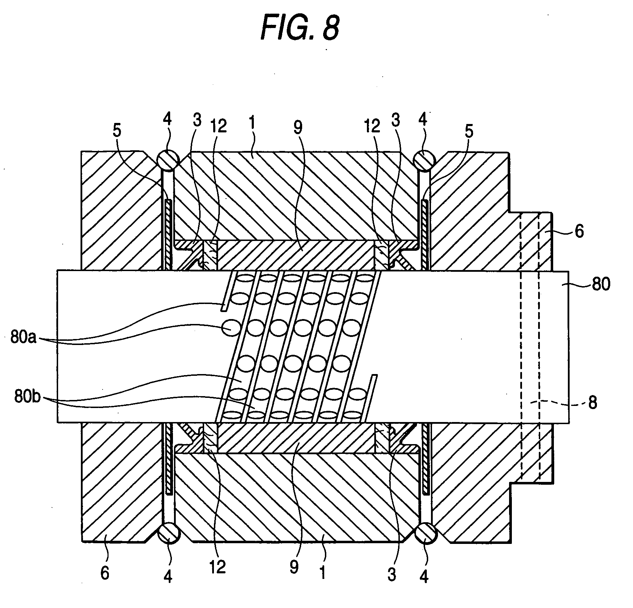

As shown in Fig. 8, a quench hardened section 80a may be constituted of a helically-quench hardened section and a circularly-quench hardened section formed between portions of the quench hardened section. This embodiment can also yield the same effect as that yielded previously.

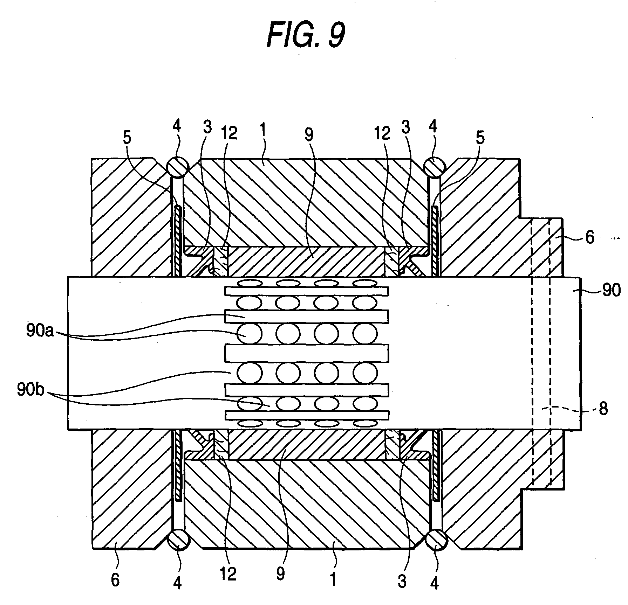

As shown in Fig. 9, a quench hardened section 90a may be constituted of a quench hardened section parallel to the axis of a shaft 90 and a circularly-quench hardened section formed between portions of the quench hardened section. This embodiment can also yield the same effect as that yielded previously.

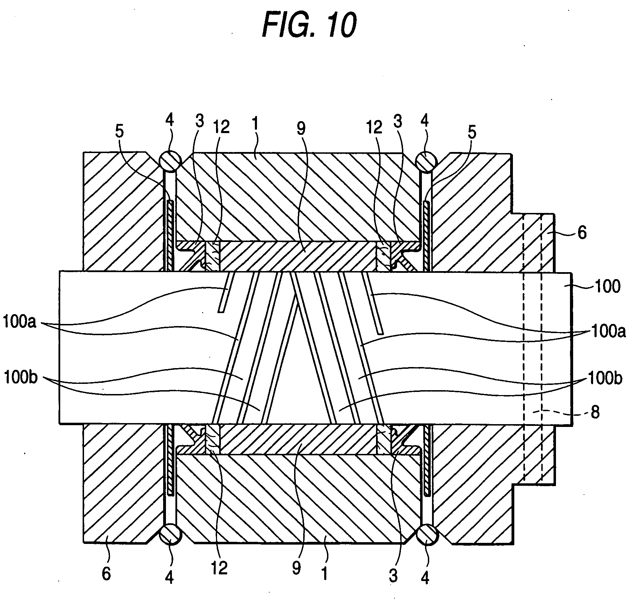

Further, as shown in Fig. 10, a quench hardened section 100a can be formed such that one side of the quench hardened section with respect to a substantial center of a shaft 100 and the other side of the quench hardened section are the form of inverted helixes running in opposite directions. This embodiment can also lessen the degree of unbalanced presence of the lubricant within the bearing apparatus.

The area percentage of the quench hardened sections on the respective sliding surfaces of the shafts 70, 80, 90, and 100 described by reference to Figs. 7 through 10 preferably ranges from 20 to 80%, and more preferably 50 to 80%, for the same reason as that provided previously.

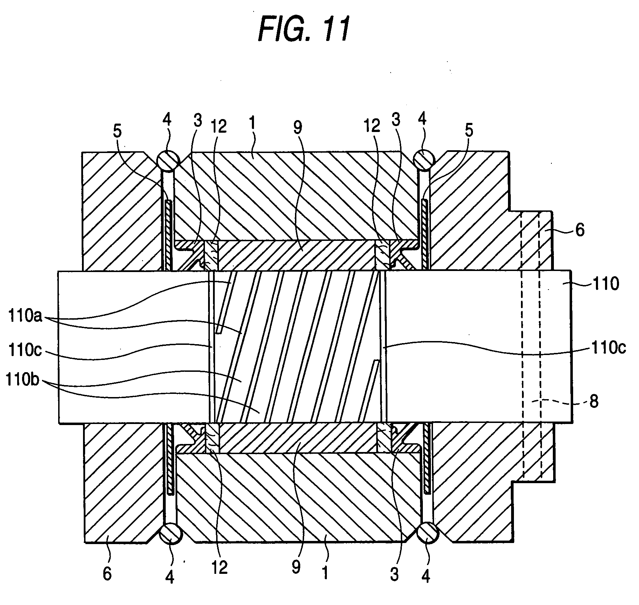

As shown in Fig. 11, a protruding quench hardened section 110c can be provided on an outer surface of a shaft 110 opposing the oil shielding members 12 press-fitted to both sides of the bush 9 by means of irradiation with a laser, irradiation with an electron beam, or induction hardening. According to the present embodiment, contact bearing pressure developing between the oil shielding members 12 and the shaft 110 is made uniform, thereby preventing leakage of oil, and abrasion of the shaft, which would otherwise be caused when the oil shielding members 12 bite gravel. Such a quench hardened sections 110c can be applied to the shafts having the quench hardened sections such as those shown in Figs. 5 through 10. The shape of the quench hardened sections 110c is not limited to a single ring shown in Fig. 11 but may be a plurality of rings or another shape. Further, the quench hardened sections 110c may be provided at positions where they oppose the dust seals 3 provided on the surface of the shaft.

The life of the bearing apparatus can be increased by means of providing lubricant, such as grease or wax, on the sliding surface formed from the shaft having the quench hardened section formed in the patterns, such as those described in connection with Figs. 5 through 11, and from the lubricant-impregnated bush.

### <Industrial Applicability>

As has been described, a bearing apparatus of the present invention enables oilless sliding action of a shaft under operating conditions of high bearing pressure over a long period of time, and hence the life of machinery using this bearing apparatus can be increased.

Further, when a shaft of the present invention is combined with a lubricant-impregnated porous bush, thereby further improving the function of the porous bush.

Although having been described in detail by reference to the specific embodiments, the present invention is susceptible to various modifications and alterations without departing from the spirit and scope of the present invention.

## Claims

1. A bearing apparatus comprising:
a porous bush impregnated with lubricant;
a shaft supported by the bush;
a quench hardened section formed in a projecting manner on an outer surface of the shaft which faces an inner surface of the bush; and
an indentation which is formed between portions of the quench hardened section and traps lubricant flowing out of the bush.

2. The bearing apparatus according to claim 1, wherein the quench hardened section is helically provided on the outer surface of the shaft.

3. The bearing apparatus according to claim 1, wherein the quench hardened section is provided on the outer surface of the shaft in the form of a line parallel to an axial direction of the shaft.

4. The bearing apparatus according to claim 1, wherein the quench hardened section is provided on the outer surface of the shaft in the form of a plurality of circles.

5. The bearing apparatus according to claim 1, wherein the quench hardened section is provided on the outer surface of the shaft in the form of a lattice.

6. The bearing apparatus according to claim 2, wherein the quench hardened section is provided on the outer surface of the shaft such that one side of the quench hardened section with respect to a substantial center of the shaft in an axial direction thereof and the other side of the quench hardened section are the form of inverted helixes.

7. The bearing apparatus according to any one of claims 1 to 6, further comprising:
sealing members provided on both sides of the bush in an axial direction thereof,
wherein the quench hardened section is provided at positions on the outer surface of the shaft facing the sealing members.

8. A construction equipment which is provided with the bearing apparatus according to any one of claims 1 to 7, the bearing apparatus being provided at a joint of arms constituting an articulated arm.

9. A shaft comprising:
a quench hardened section formed on an outer surface of the shaft in a projecting manner; and
an indentation formed between portions of the quench hardened section,
wherein the indentation traps lubricant flowing out of a porous bush which is impregnated with lubricant and supports the shaft.

10. The shaft according to claim 9, wherein the quench hardened section is helically provided on the outer surface of the shaft.

11. The shaft according to claim 9, wherein the quench hardened section is provided on the outer surface of the shaft in the form of a line parallel to an axial direction of the shaft.

12. The shaft according to claim 9, wherein the quench hardened section is provided on the outer surface of the shaft in the form of a plurality of circles.

13. The shaft according to claim 9, wherein the quench hardened section is provided on the outer surface of the shaft in the form of a lattice.

14. The shaft according to claim 10, wherein the quench hardened section is provided on the outer surface of the shaft such that one side of the quench hardened section with respect to a substantial center of the shaft in an axial direction thereof and the other side of the quench hardened section are the form of inverted helixes.
